# EUROPEAN PATENT APPLICATION

(11) **EP 2 546 747 A1**
(43) Date of publication of application: **16.01.2013**
(21) Application number: 11305926.5
(22) Date of filing: 13.07.2011
(51) Int. Cl.: G06F 11/14, H04L 29/08

(54) **Method for optimization of data transfer**

(71) Applicant: Thomson Licensing, 92130 Issy-les-Moulineaux (FR)
(72) Inventor: Le Scouarnec, Nicolas, 35576 Cesson-Sevigne (FR); Le Merrer, Erwan, 35576 Cesson-Sevigne (FR); Straub, Gilles, 35576 Cesson-Sevigne (FR)
(74) Representative: Huchet, Anne

(57) **Abstract**

The present invention generally relates to optimization of data transfer, and in particular allows optimizing copying of data from a device in a local area network to a distant device in a wide area network.

## Description

### 1. Field of invention.

The present invention generally relates to optimization of data transfer, and in particular allows optimizing copying of data from a device in a local area network to a distant device in a wide area network.

### 2. Technical background

It is increasingly common for today's users to gather large quantities of digital data, for example in the form of photos, videos, and documents. An average user having several digital devices thus gathers over some years a huge amount of data that often is of important sentimental value. This digital data is most often stored on and dispersed over internal or external magnetic or optical disks, memory cards and USB keys. Data loss is alas frequent due to reasons which comprise human error, physical device loss, mechanic or electronic failures and theft. Even if the data stored has an important personal value, too few users are concerned with backing up their personal data for reasons ranging from not being aware of the fragility of the unique support to the lack of simple backup management tools, and, most commonly, the important time investment needed to regularly backup the huge quantity of data that is in addition dispersed over the user's digital devices is often felt as an unwelcome waste of time. The minority of users that are aware of the need to backup their personal data tend to store their data on local, external USB disc drives or DVD discs. Even for these users, management of the backup process is difficult and backing up of data is in most cases done through a one to one copy of disc directories, even if incremental backup would be sufficient. To ensure against data loss for the previously discussed reasons, Internet providers have proposed online data storage services. But due to the important dissymmetry between download and upload bandwidth available to a user uploading of huge quantities of data to such Internet data storage remains a time-consuming and tedious task that requires long hours of presence of the user and the devices from which data is backed up need to stay powered on during the data upload, and which monopolizes the upload link during the upload process.

The same is true for copying of voluminous data stored in devices connected in a local area network such as photos to a photo development service on the web, or for making these photos available to an online photo sharing tool such as Picasa.

There is thus a need for optimization of the data transfer process in order to effectively protect against data loss and/or in order to allow a data transfer process that is easier to use.

### 3. Invention summary

The present invention proposes to alleviate some of the inconveniences of prior art by making the transfer of huge quantities of data to an online server easier and more accessible for users.

To this end, the invention proposes a method for optimization of data transfer, via a gateway, of data stored in at least one client device connected in a local area network to at least one server connected in a wide area network, the method being implemented by the gateway, the method comprising steps of:
- reception of a discovery request from the at least one local area device, for discovery of a capability of the gateway to handle delayed data transmission;
- transmission of a response to the discovery request indicating the capability of the gateway to handle delayed data transmission;
- reception of a request for opening of a data transmission session where all of the data is copied from the at least one client device to a temporary data storage offered by the gateway, where after the at least one client is allowed to close the data transmission session; and
- as long as the temporary data storage of the gateway still contains copied data, transfer of the copied data from the temporary storage in repeated steps of transfer of portions of the copied data to the at least one server, until all of the copied data is transferred.

According to a variant embodiment of the method, the method further comprises a step of asynchronous transmission of a notification to the at least one client device indicating that all of the copied data is transferred to the at least one server.

According to a variant embodiment of the method, the asynchronous transmission of a notification is a transmission of an email indicating that all of the data is transferred to the at least one server.

According to a variant embodiment of the method, the method further comprises a step of temporary interruption of the step of transfer of portions according to transmission priority, the transfer of portions being suspended during a data transmission for higher priority data transfer, and the transfer of portions being resumed when the higher priority data transfer is done.

According to a variant embodiment of the method, the method further comprises a step of continuous adaptation of a data transmission speed for data transferred in the step of transfer of portions, the continuous adaptation of the data transmission speed being a function of a predetermined maximum uplink data transmission bandwidth and of presence of other uplink traffic, the other uplink traffic having a higher priority than the data transferred in the step of transfer of portions.

According to a variant embodiment of the method, the portions of the data are pushed by the gateway device to the at least one server.

According to a variant embodiment of the method, the portions of the data are fetched from the gateway device by the at least one server.

According to a variant embodiment of the method, the method further comprises a step of conversion of the data copied to the gateway to a data format accepted by the at least one server.

According to a variant embodiment of the method, the method is implemented with the HTTP(S) protocol.

### 4. List of figures

More advantages of the invention will appear through the description of particular, non-restricting embodiments of the invention, illustrated or not by means of the accompanying drawings.
Figure 1 represents a typical environment where the invention can be implemented.
Figure 2 illustrates a data communication protocol according to a particular embodiment of the invention.
Figure 3 shows an implementation of a gateway device according to the invention.
Figure 4 shows a flow chart illustrating a specific embodiment of the method of the invention.

### 5. Detailed description of the invention

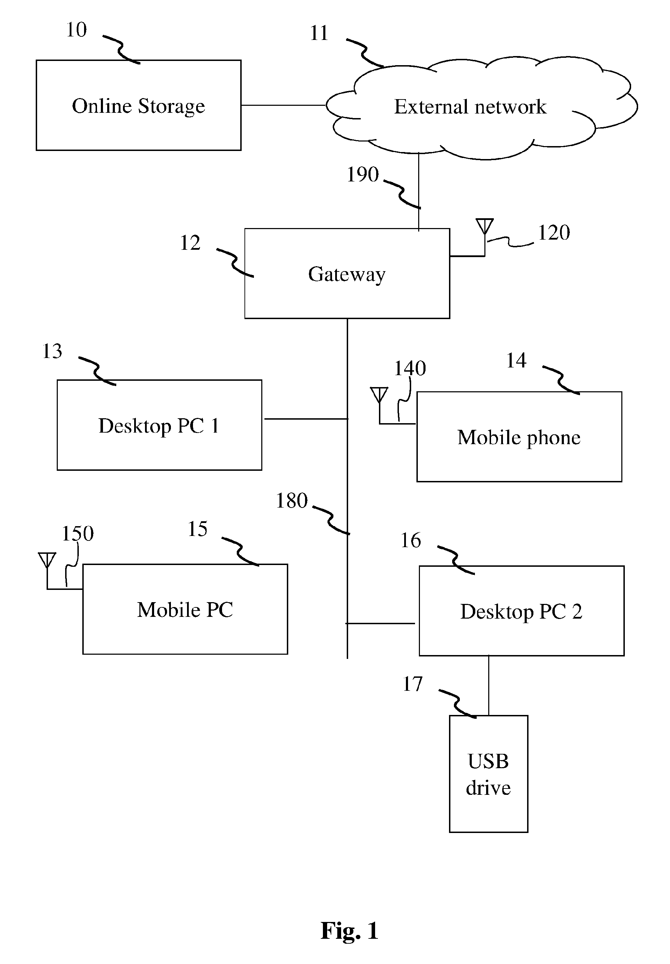

**Figure 1** represents a typical environment where the invention can be implemented. The figure comprises a home network (HN, or LAN for Local Area Network) that comprises a wired data communication network 180 and a wireless data communication network. To the HN are connected the clients of the HN, such as two desktop PC's PC1 (13) and PC2 (16), a mobile PC (15), a mobile phone (14), a USB drive (17) which clients are interconnected via a gateway (12). The devices that are equipped with a wireless network access comprise antennas 120, 140 and 150 for respectively the gateway (12), mobile phone (14) and mobile PC (15). The wireless data communication network is for example of the WiFi type. The wired data communication network is for example of the Ethernet type. Gateway 12 provides the devices in the HN with an access 190 to the External network 11, for example the Internet or a WAN (Wide Area Network). To the external network is connected an online data storage system 10.

In a typical HN, gateway 12 is a device that is nearly never powered off, whereas the other devices 13-17 are frequently powered off.

In the HN, data communication speeds are high, typically > 25 Mbit/s for the wireless network, and > 100Mbit/s for the wired network. Data communication bandwidth between the devices is thus fast and there is no difference between speed in outgoing data communication traffic and incoming data communication traffic. The link 190 to the external data communication network 11 and thus to the online storage system 10 is however much slower and in addition suffers from dissymmetry. Typical upload data communication speed is 512kbit/s, and typical download data communication speed is 20Mbit/s.

Gateway 12 comprises a temporary mass data storage device such as a disc drive, or memory card. According to the invention, the clients 13-17 of the HN upload their data to gateway 12 and the gateway takes in charge the slow upload of the data to the online storage system 10.

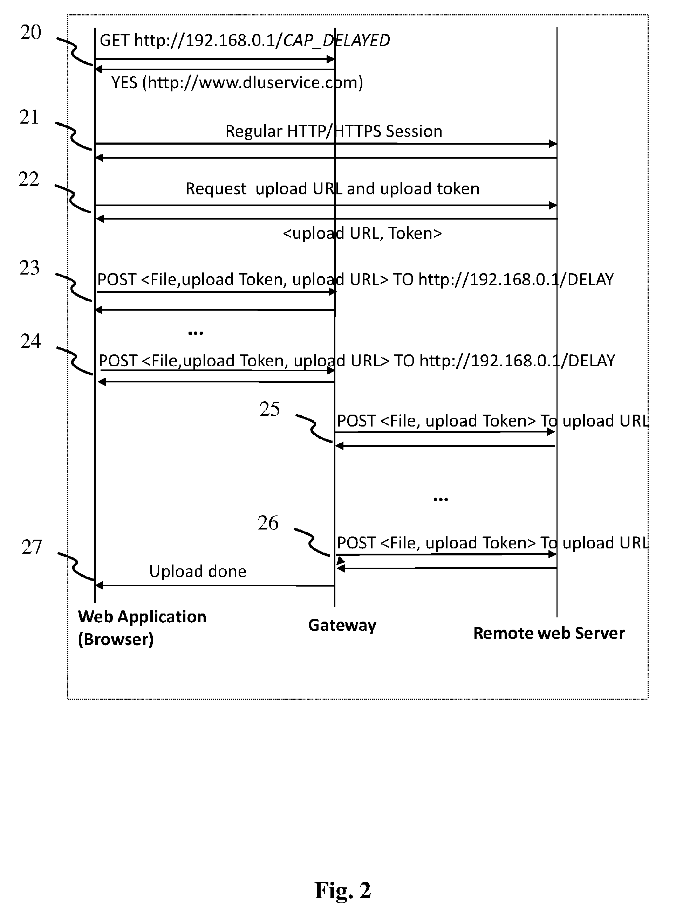

The preferred embodiment of the invention comprises a protocol for 'delayed data upload' that comprises a number of phases that are described hereunder. **Figure 2** illustrates this protocol with a diagram of exchanges between devices implementing a specific embodiment of the invention. The devices are for example the devices of figure 1.

The wording 'client' is used for any of the HN clients 13-17, such as client 15. The wording 'server', also referred to as 'delayed upload server' is a '*delayed upload* server according to the invention that is part of an online data storage system such as the online data storage system 10. Note that alternatively, as will be explained further on, the server can also be used as a 'delayed download server', in order for the client to retrieve uploaded data. The numbers of the steps refer to numbers in Fig. 2.
20) **Client - Gateway**: client 15 transmits a discovery request for discovery of capability of gateway 12 to handle delayed data transmission according to the invention. The gateway replies affirmatively and provides an URL of a server in the external network that provides this type of service. According to a variant embodiment, the mentioned URL is not provided in the response, this URL being already known in advance, for example it is stored in the local network devices.
21) **Client - Server:** client 15 and server 10 perform a regular HTTP(s) session during which they set up the communication. Such a session typically comprises an authentication phase.
22) **Client - Server:** client 15 and server 10 both agree on a token and a destination URL. The token is a unique identifier that is to be used for any further data communication between the client 15 and server 10 and can be provided by either of client 15 or server 10. The destination URL is provided by the server 10 and is stored by client 15. It indicates the URL where data of the client 15 can be uploaded to.
23-24) **Client - Gateway:** Using the high-speed HN, client 15 uploads the data, the token and the destination URL to gateway 12 in a data transmission session. A single file or several files may be transferred during the data transmission session. In the case of several files, and according to a variant embodiment, a new token may requested for each file to ensure even better protection, the token being only valid for one file. The client 15 is done when the data is uploaded to the gateway 12 and is free to engage other activities, to close the data transmission session, or even disconnect from the HN, or power off. This data transmission session step is typically very fast because the upload to the gateway 12 benefits from high-speed data transmission between devices connected in the HN. During this session, the data from the client 15 is copied in a temporary data storage offered by gateway 12.
25-26) **Gateway - Server:** The gateway 12 automatically uploads/transfers the data copied from the client 15, to the destination URL while providing the token. Each time when the server receives a file and a token from gateway 12, the file is processed (antivirus check, integrity check, .... to be finally stored) and exchanges take place for this purpose between the gateway and the server as in a regular HTTP or HTTPS session. This upload is typically slow because the data is transmitted over the link 190 which is quite limited in upload data speed. For instance, a HN has a bit rate of 7**M**Bit/s compared to an ADSL line having a bit rate of 128kBit/s. The upload/transfer is done in repeated steps of transfer of portions of the copied data to the server, until all of the copied data is transferred to the server.
27) **Gateway - Client:** Optional step, in which, once the data upload is complete, the user is notified asynchronously, for example by email, instant messaging, desktop notification or SMS (Short Message Service), Twitter or by a notification inserted on a web page. Alternatively, it is the server that transmits the notification.

The above communication scheme of transferring data from the gateway to the server is referred to as data pushing. Alternatively, a different communication scheme is possible for implementing the invention. Instead of, after having uploaded the data to store in the online storage system to the gateway, having the gateway 12 transferring data to the online storage system 10, the gateway communicates to the online storage system an URL where the online data storage system can retrieve the data. This type of data transfer is referred to as data fetching.

The above protocol can be implemented by applications on client and server side, for example by means of web applications. The above example is based on use of the HTTP protocol, which has the advantage to be able to traverse a NAT (Network Address Translation), which presence is frequent in home networks where it is common to hide an entire IP address space, consisting of private IP addresses of the HN clients, behind a single public IP address of the gateway. Other types of protocols are possible and may be appropriate according to the circumstances, such as HTTPS which is a combination of the Hypertext Transfer Protocol with the SSL/TLS protocol to provide encrypted communication and secure identification of a network web server, which is useful in the transfer of sensitive data such as private data of a user. Other data communication protocols than HTTP or HTTPS can be used with the invention according to variant embodiments, such as FTP (File Transfer Protocol) or WebDAV (Web-based Distributed Authoring and Versioning).

According to a particular advantageous variant embodiment of the invention, the gateway 12 takes in charge all direct communication with the delayed upload server 10, which has the advantage for client 15 to remain completely unaware of the implementation details and further eases the backup task for clients. In such a case, reply in step 20 does not comprise the delayed upload server's URL, and steps 21, 22 are exchanged between the gateway 12 and delayed upload server 10. However, additional communication in step 20 might be needed in order to transfer from the client to the gateway the user's credentials that are needed for the gateway 12 to set up the delayed upload session with the delayed upload server 10. Alternatively, if gateway 12 and delayed upload server 10 are provided by a same Internet provider, such credentials are stored in gateway 12 and the discussed additional communication between the client 15 and gateway 12 is thus not necessary.

When it comes to retrieving transferred data, the role of all elements in the systems are reversed. To retrieve transferred data, the client requests the desired data from the gateway. The gateway carries out a delayed download on behalf of the client by contacting the delayed upload server. When the gateway has succeeded in getting the whole data, it notifies the client that its data retrieval request has been completed, for example via email.

According to a variant embodiment of the invention, the gateway suspends uploads or downloads when link 190 is used for other, higher priority data traffic, so that the upload/download does not delay this traffic. Higher priority traffic is for example 'normal' upload or download traffic that is not a data transfer according to the invention. This variant offers a particular advantage to the user so that he/she is not experiencing data transmission delays due to any data transferred according to the invention.

According to a variant embodiment of the invention, data transmission speed for data transferred in the step of transfer of portions is continuously adapted to the traffic on the uplink 190, as a function of a predetermined maximum uplink and/or downlink data transmission bandwidth and of presence of other uplink and/or downlink traffic, the other uplink and/or downlink traffic having a higher priority than the data transferred in the step of transfer of portions. The maximum uplink and/or downlink data transmission bandwidth is for example a parameter stored in the gateway by the Internet provider, or negotiated between the Internet provider and the gateway. This variant embodiment allows to 'fine tune' the use of the link 190, so as to further optimize its use and allow for both unperturbed 'normal' traffic and increasing the data transmission speed of data transferred according to the present invention.

According to a variant embodiment of the invention, the role of the gateway (= 'data transfer agent', see further on) according to the invention as described in the previous embodiments is played by another device that remains powered on most of the time and that provides the discussed temporary storage and means for access to the Internet.

According to a variant embodiment, some of the described steps are executed in parallel, such as the step of copying data from a client to the gateway and transferring of copied data to the server, so that even if the client is still busy copying data to the gateway, transferring of already copied data to the server is ongoing. When the client finishes and possibly drops the connection to the gateway, the gateway will continue to transfer data to the server as long as there is data to transfer.

All or some of the variant embodiments can be combined so as to offer particular advantageous embodiments.

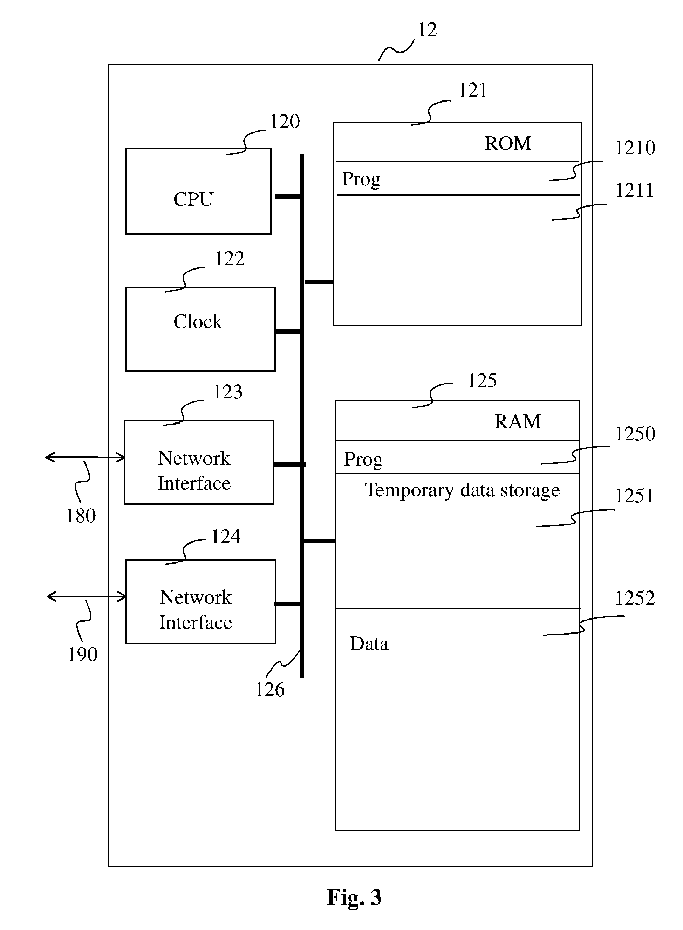

**Figure 3** shows an implementation of a gateway device according to the invention. The gateway 12 comprises the following elements:
- a central processing unit 120 or CPU;
- a clock unit 122;
- a first network interface 123;
- a second network interface 124;
- a non-volatile memory ROM 121; and
- a volatile memory RAM 125.

All of these components are interconnected via a data- and communication bus 126. CPU 120 controls the functioning of the device 12 according to a program that is stored in ROM 121 in a memory zone 1210. This program comprises the algorithm of the invention. Clock device 122 provides the other components of gateway 12 with a common timing in order to sequence and synchronize their operation. First network interface 123 receives data from and transmits data to other devices connected to the home network clients. Upon powering on of device 12, CPU 120 copies the program 'Prog' stored in ROM 121 memory zone 1211 into memory zone 1250 of RAM memory 125, and executes the copied program. Upon execution of the copied program, the program allocates memory space for variables needed for its execution in memory zone 1252. The device 12 is now started and is ready to function. Memory zone 1251 of RAM memory 125 comprises temporary space for storing data to be transferred to data storage system 10.

Alternatively, at least some parts of RAM 125 is implemented through an NVRAM (Non-volatile RAM) memory, thereby advantageously allowing these at least some parts of the RAM memory to be persistent with regard to power failures.

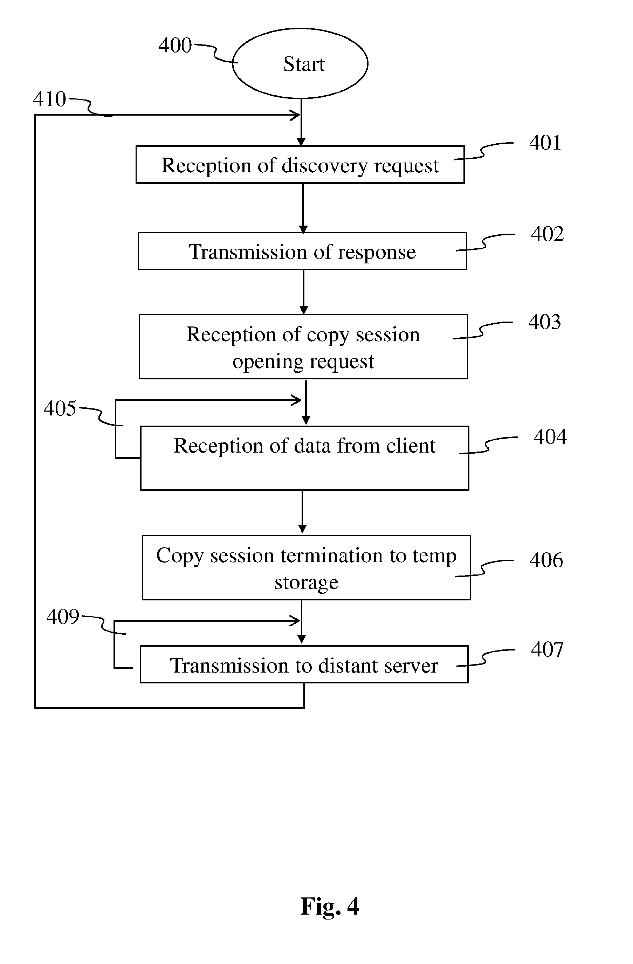

**Figure 4** shows a flow chart illustrating a specific embodiment of the method of the invention. In step 400, variables needed for execution are initialized and data and programs are for example copied from ROM 121 to RAM 125 with reference to figure 3. In a step 401, a discover request is received from a local area network client device for discovery of capability of the gateway (for example gateway 15) to handle delayed data transmission, that is, the transmission of data from the client device (for example client device 15) to a server device in the wide area network according to the protocol of the invention (for example a server of the data storage system 10). In a step 402, the gateway responds affirmatively to the client. Steps 401 and 402 correspond for example to step 20 of figure 2. In a step 403, a data copy session or data transmission session is set up between the client and the gateway. This step corresponds for example to step 21 of figure 2. In a step 404, data is received from the client. If the data transfer comprises several files, this step is repeated as is illustrated by arrow 405. Steps 404 and 405 correspond for example to steps 23-24 of figure 2. As the data is received, it is stored, in step 406 in temporary storage of the gateway, for example in temporary data storage 1251 of figure 3. In a step 409, data stored in temporary storage is transferred to the distant server, for example to a server that is part of data storage system 10. In a step 410, the method is ready to receive a new request for discovery.

In practice, step 403 can be executed directly without passing step 401/402 as a client may already be aware of the capability of the gateway to execute delayed uploads. Furthermore, the steps of the invention are shown in sequential order, but some steps can in practice be parallelized to offer optimized responsiveness and data throughput. For example, during the time necessary for client to copy data to the gateway, the transmission of already received data may be started. Also, even if a transmission of data to distant server is ongoing, gateway may perfectly well be able to reply to new discovery requests, or even to receive new data from the same or another client. The flow chart illustrates steps for upload of data, but the reader will understand that 404 and 407 steps can to be replaced by respectively transmission and reception of data in the case of download of data from the distant server and transmission of this data to the client device.

Among the advantages of the invention over prior art, are:
- The whole upload/download capacity of link 190 can be used when there is no other traffic caused by use of clients of the HN, for example during nighttime;
- Data is quickly uploaded from a client of the HN to the gateway. The HN client is free to rapidly leave the HN, the gateway acts as a background data transfer agent on behalf of the client. That the gateway continues the upload on behalf of the client when the client leaves, advantageously distinguishes the invention from prior art, where direct connections are made between the client of the HN and the remote storage server, via for example using buffers at TCP/IP connection level. In the latter case, if the connection between the client is dropped for any reason before the whole of the upload is completed, the whole transfer is lost in the worst case (for example in the case of transfer of one huge file), or the last transferred file is lost in the best case (for example in the case of transfer of several files). According to the invention the gateway thus acts as an active participant by means of the background data transfer agent, and not only acts as a passive buffering device. In case of implementation with the HTTP or HTTPS protocol, the invention comprises two http servers, one on the gateway which offers the delayed upload service to devices of the HN, and one on the online data storage system;
- The usage of bandwidth can be smoothed for providing clients with a more transparent service (i.e., using the upload for backup when clients are not using their Internet connection). Indeed, using the whole upload/download capacity of link 190 while a client is using this link for other purposes may severely affect responsiveness of the Internet access. Such a feature also allows a provider of an Internet storage system to delay transfer from gateways to the Internet and thus smooth the usage of its core network.

The invention can find application for example in online backup service applications, but also, for upload of photos such as Photoweb and Picasa. Through a partnership between Picasa and an Internet provider (that also provides gateways implementing the invention) Picasa can be used advantageously, offering a better user experience. According to a variant embodiment of the invention, the gateway automatically converts the photos uploaded to the gateway to a format (e.g. tiff to jpeg) and/or dimension (e.g. high to low resolution) accepted by the Picasa server, thus relieving the user of this tedious task. The format and/or dimension accepted by the Picasa server is negotiated between the gateway and the Picasa server, possibly taking into account a format and/or dimension preference specified by the user. The gateway can execute the conversion as a background task, thereby avoiding delaying the handling of tasks with higher priority, such as routing 'normal' traffic between HN devices or between HN devices and the Internet.

## Claims

1. Method for optimization of data transfer, **characterized in that** said method optimizes said data transfer, via a gateway, of data stored in at least one client device connected in a local area network to at least one server connected in a wide area network, said method being implemented by said gateway, said method comprising the steps of:
- reception of a discovery request from said at least one local area device, for discovery of a capability of said gateway to handle delayed data transmission;
- transmission of a response to said discovery request indicating said capability of said gateway to handle delayed data transmission;
- reception of a request for opening of a data transmission session where all of said data is copied from said at least one client device to a temporary data storage offered by said gateway, where after said at least one client is allowed to close said data transmission session; and
- as long as said temporary data storage of said gateway still contains copied data, transfer of said copied data from said temporary storage in repeated steps of transfer of portions of said copied data to said at least one server, until all of said copied data is transferred.

2. Method according to claim 1, **characterized in that** said method further comprises a step of asynchronous transmission of a notification to said at least one client device indicating that all of said copied data is transferred to said at least one server.

3. Method according to claim 2, **characterized in that** said asynchronous transmission of a notification is a transmission of an email indicating that all of said data is transferred to said at least one server.

4. Method according to any of claims 1 to 3, **characterized in that** it further comprises a step of temporary interruption of said step of transfer of portions according to transmission priority, said transfer of portions being suspended during a data transmission for higher priority data transfer, and said transfer of portions being resumed when said higher priority data transfer is done.

5. Method according to any of claims 1 to 3, **characterized in that** it further comprises a step of continuous adaptation of a data transmission speed for data transferred in said step of transfer of portions, said continuous adaptation of said data transmission speed being a function of a predetermined maximum uplink data transmission bandwidth and of presence of other uplink traffic, said other uplink traffic having a higher priority than said data transferred in said step of transfer of portions.

6. Method according to any of claims 1 to 5, **characterized in that** said portions of said data are pushed by said gateway device to said at least one server.

7. Method according to any of claims 1 to 5, **characterized in that** said portions of said data are fetched from said gateway device by said at least one server.

8. Method according to any of claims 1 to 5, **characterized in that** said method further comprises a step of conversion of said data copied to said gateway to a data format accepted by said at least one server.

9. Method according to any of claims 1 to 5, **characterized in that** said method is implemented with the HTTP(S) protocol.
